# FASCICULE DE BREVET EUROPEEN

(11) **EP 2 381 392 B1**
(45) Date de publication et mention de la délivrance du brevet: **04.11.2015**
(21) Numéro de dépôt: 11163330.1
(22) Date de dépôt: 21.04.2011
(51) Int. Cl.: G06K 17/00, G07C 9/00

(54) **Dispositif de verrouillage et d'immobilisation de vehicule automobile**
Vorrichtung zur Verriegelung und Blockade für Kraftfahrzeuge
Device for locking and immobilising an automobile

(30) Priorité: 28.09.2010 FR 1003837
(43) Date de publication de la demande: 26.10.2011
(73) Titulaire: Valeo Comfort and Driving Assistance, 94046 Créteil Cedex (FR)
(72) Inventeur: Menard, Eric, 94046, CRETEIL (FR); Leconte, Eric, 94046, CRETEIL (FR); Petel, Laurent, 94046, CRETEIL (FR)
(74) Mandataire: Pothmann, Karsten

(56) Documents cités:
- EP-A1- 1 191 486
- EP-A1- 2 088 040
- DE-A1-102008 004 111
- DE-A1-102008 039 156
- US-A1- 2006 219 776

## Description

L'invention concerne un dispositif de verrouillage/déverrouillage et de démarrage de véhicule automobile, en particulier avec une interaction à distance de type entrée à distance sans clé (remote keyless entry).

Le document DE 102008039156 décrit un dispositif selon le préambule de la revendication 1.

Les dispositifs d'accès à un véhicule, basés sur une interaction à distance entre une clé et un récepteur du véhicule utilisent généralement une technique de radio-identification (RFID). L'utilisateur porte un identifiant comportant un transpondeur ou émetteur qui, lorsqu'il se trouve dans un périmètre prédéfini autour du véhicule déclenche soit directement le déverrouillage des ouvrants, soit place lesdits ouvrants dans un état "prêt à déverrouiller", et le déverrouillage se fera par actionnement d'un commutateur soit au niveau des poignées, soit au niveau de l'identifiant.

Le périmètre que de tels dispositifs d'accès définissent est en général de quelques mètres (5 à 20) autour des véhicules. Cette relative étendue du périmètre représente une faille de sécurité dans le contrôle de l'accès au véhicule.

La communication en champ proche, usuellement appelée NFC (pour Near Field Communication), utilise un protocole d'échanges de données basé sur des radiofréquences de très courte portée. Il s'agit d'une extension des techniques de radio-identification qui, tout en se basant sur la norme ISO/IEC 14443, permet la communication entre périphériques en mode pair à pair. Le protocole NFC est basé sur un couplage inductif et une modulation de charge au niveau d'un appareil esclave.

Au contraire d'autres techniques de radio-identification ou du bluetooth dont la portée est d'une dizaine de mètres, la technique NFC est utilisable sur de très courtes distances, quelques centimètres. Elle suppose une démarche volontaire de l'utilisateur et ne peut donc normalement pas être utilisée à son insu, ce qui apporte une garantie de sécurité pour des transaction sensibles comme une opération bancaire ou le déverrouillage d'un véhicule.

La technologie NFC est actuellement développée par un consortium industriel regroupé sous le nom de Forum NFC. La technologie NFC est dérivée de la technologie RFID (Radio Frequency Identification) et utilise des composants ou processeurs NFC présentant plusieurs modes de fonctionnement, notamment un mode lecteur et un mode émulation de carte.

En mode lecteur, un processeur NFC fonctionne comme un lecteur RFID conventionnel pour accéder en lecture ou écriture à une puce RFID. Le processeur NFC émet un champ magnétique, envoie des données par modulation de l'amplitude du champ magnétique et reçoit des données par modulation de charge et couplage inductif. Ce mode est également qualifié de mode actif car le processeur NFC émet un champ magnétique dans ce mode.

Dans le mode émulation, un processeur NFC fonctionne de façon passive à la manière d'un transpondeur pour dialoguer avec un autre lecteur et être vu par l'autre lecteur comme une puce RFID. Le processeur n'émet pas de champ magnétique, reçoit des données en démodulant un champ magnétique émis par l'autre lecteur et émet des données par modulation de l'impédance de son circuit d'antenne (modulation de charge). Ce mode est également qualifié de mode passif, car le processeur NFC n'émet pas de champ magnétique dans ce mode.

D'autres modes de communication peuvent être mis en oeuvre, notamment un mode dit "device" où un composant doit s'apparier avec un autre processeur NFC se trouvant dans le même mode de fonctionnement, chaque processeur NFC se place alternativement dans un état passif (sans émission de champ) pour recevoir des données et dans un état actif (avec émission de champ) pour émettre des données.

Dans ces trois modes de fonctionnement, un processeur NFC peut mettre en oeuvre plusieurs protocoles de communication sans contact par exemple ISO 14443-A, ISO 14443-B ou ISO 15693. Chaque protocole définit une fréquence d'émission du champ magnétique, une méthode de modulation de l'amplitude du champ magnétique pour émettre des données en mode actif, et une méthode de modulation de charge par couplage inductif pour émettre des données en mode passif.

Un certain nombre de normes définissent le protocle NFC :
- NFCIP-1 (ISO/IEC 18092) définit l'interface et le protocole de communication entre deux périphériques NFC;
- ISO/IEC 14443-1 à ISO/IEC 14443-4 définissent la communication avec des circuits intégrés sans contact;
- NDEF (NFC Data Exchange Format) définit le format d'échange logique des données.

La communication NFC présente généralement les caractéristiques suivantes :
- Débits de communication : 106, 212, 424 ou 848 kbit/s ;
- Gamme de fréquence : 13,56 MHz ;
- Distance de communication : environ 10 cm ;
- Mode de communication : half-duplex ou full-duplex ;

L'invention vise à résoudre un ou plusieurs des inconvénients cités. L'invention porte ainsi sur un dispositif de verrouillage/déverrouillage et/ou de démarrage d'un véhicule automobile selon la revendication 1.

Le dispositif de verrouillage et d'immobilisation selon l'invention peut en outre comporter une ou plusieurs des caractéristiques suivantes, prises seules ou en combinaison.

L'interface de lecture comporte une antenne disposée au niveau d'un commutateur de démarrage/arrêt du véhicule.

L'interface de lecture comporte une antenne disposée dans un vide-poche central de l'habitacle du véhicule.

L'interface de lecture comporte une antenne disposée sur une station d'accueil disposée dans l'habitacle du véhicule.

L'interface de lecture comporte une antenne disposée au niveau de la poignée extérieure d'un ouvrant du véhicule.

L'interface de lecture comporte une antenne disposée au niveau du cadre d'un ouvrant du véhicule.

L'interface de lecture comporte une antenne disposée au niveau de la vitre d'un ouvrant du véhicule.

L'interface de lecture comporte une première antenne reliée au dispositif de verrouillage/déverrouillage des ouvrants , et une seconde antenne reliée au système de démarrage du véhicule, .

L'interface de lecture et l'interface de communication radiofréquence sont configurées de manière à ce que l'échange des données d'identification se fait par une communication de type requête/réponse, en particulier par procédé OCSP.

Le dispositif comprend en outre un téléphone mobile apparié à la clé pour permettre le verrouillage/déverrouillage des ouvrants et/ou le démarrage du véhicule par échanges des données d'authentification avec l'interface de lecture.

D'autres caractéristiques et avantages de l'invention apparaîtront à la lecture de la description détaillée des figures qui suit, parmi lesquelles :
- la figure 1 est un schéma synoptique d'un véhicule comportant un dispositif de verrouillage et d'immobilisation selon l'invention;
- la figure 2 est une vue schématique de l'intérieur de l'habitacle d'un véhicule comportant un mode de réalisation particulier de dispositif de verrouillage et d'immobilisation selon l'invention;
- la figure 3 est une vue schématique simplifiée d'un véhicule comprenant un mode de réalisation particulier de dispositif de verrouillage et d'immobilisation selon l'invention.

Sur toutes les figures les mêmes références se rapportent aux mêmes éléments.

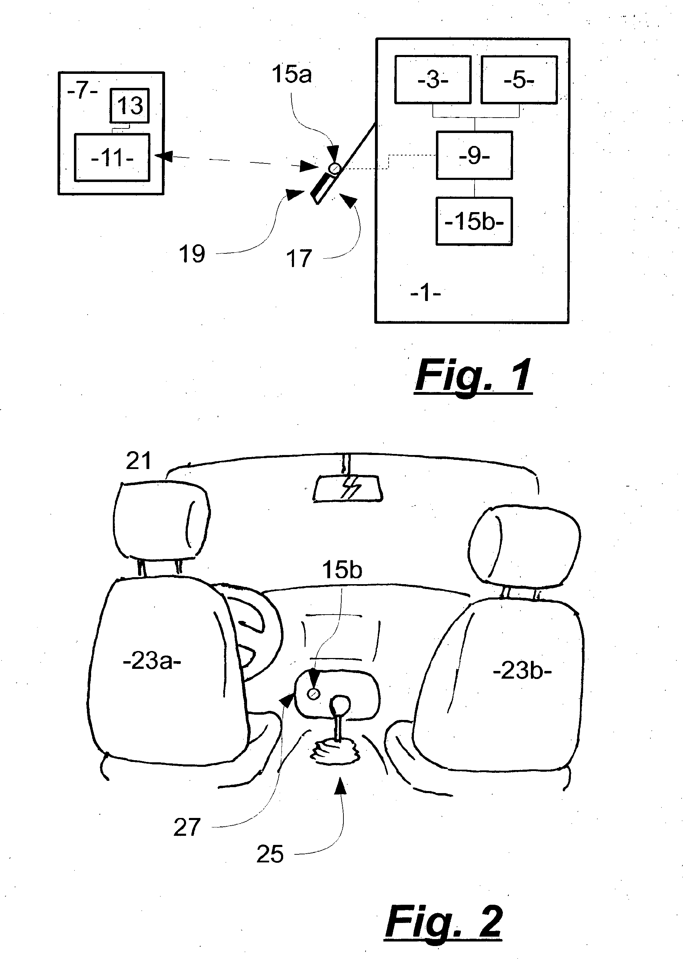

L'invention concerne un dispositif de verrouillage/déverrouillage et/ou de démarrage d'un véhicule automobile. La figure 1 montre de façon schématique un véhicule 1, comportant un dispositif de verrouillage/déverrouillage 3 contrôlant l'état verrouillé ou non des ouvrants et un système de démarrage 5, apte à autoriser le démarrage et procéder à l'arrêt du véhicule. Au véhicule 1 est associé une clé 7, destinée à être portée par l'utilisateur.

Le dispositif de verrouillage/déverrouillage 3 et le système démarrage 5 sont reliés à une interface de lecture 9, à laquelle correspond une interface de communication radiofréquence 11 disposée sur la clé 7, avec laquelle elle peut échanger des données. La clé comporte en outre une mémoire 13 contenant des données d'authentification de la clé 7.

L'interface de lecture 9 est reliée à une première antenne 15a disposée sur un ouvrant 17, préférentiellement l'ouvrant conducteur, au niveau de la poignée extérieure 19. L'interface de lecture 9 est aussi reliée à une seconde antenne 15b, située dans l'habitacle du véhicule 1. En particulier, ladite seconde antenne 15b peut être placée au niveau d'un commutateur de démarrage/arrêt du véhicule 1. Un tel commutateur se situe généralement en haut de la colonne de direction, au niveau du volant du véhicule 1 . Il peut également se présenter sous la forme d'un bouton poussoir dit bouton de démarrage « start/stop ».

De la sorte les antennes 15a, 15b sont situées à des endroits dont l'utilisateur doit naturellement approcher la main, et donc la clé 7, pour accéder au véhicule 1 et le faire démarrer.

Le dispositif de verrouillage/déverrouillage 3 est configuré entre autre pour basculer d'un état verrouillé, ou les ouvrants sont verrouillés à un état déverrouillé, où les ouvrants sont déverrouillés ou dans un état "prêt à déverrouiller", lors d'une authentification positive de la clé 7 auprès de l'interface de lecture 9. L'authentification est effectuée par l'échange de données d'authentification entre la clé 7 et l'interface de lecture 9 via la première antenne 15a.

Le système de démarrage 5 est configuré pour autoriser le démarrage du moteur du véhicule en présence d'une authentification positive de la clé 7 auprès de l'interface de lecture 9. L'authentification est effectuée par l'échange de données d'authentification entre la clé 7 et l'interface de lecture 9 via la seconde antenne 15b.

L'interface de lecture comporte donc une première antenne 15a associée au dispositif de verrouillage/déverrouillage 3 des ouvrants du véhicule 1 et destinée à contrôler le verrouillage/déverrouillage des ouvrants, et une seconde antenne 15b associée au système de démarrage 5 du véhicule, destinée à contrôler le démarrage et/ou l'arrêt du moteur du véhicule 1.

Afin de sécuriser l'échange des données d'authentification entre la clé 7 et l'interface de lecture 9, l'interface de communication radiofréquence 11 de la clé 7 et l'interface de lecture 9 sont configurées pour procéder à l'échange des données d'authentification de la clé selon un protocole de communication en champs proche NFC.

En particulier, l'échange de données d'authentification peut se faire par un protocole de type "requête/réponse", tel que le protocole de vérification en ligne de certificat (Online Certificate Status Protocol) pour plus de sécurité.

Il est donc nécessaire d'approcher la clé 7 de l'antenne 15a pour procéder au verrouillage/déverrouillage des ouvrants. De la même manière il sera nécessaire d'approcher la clé 7 de l'antenne 15b pour procéder au démarrage du véhicule. Sur la figure 2 est représentée une vue de l'intérieur de l'habitacle 21 d'un véhicule 1 comportant un dispositif de verrouillage/déverrouillage et de démarrageselon un mode de réalisation alternatif de l'invention. Sur la figure 2 on peut voir les sièges conducteur 23a et passager 23b. Entre les deux se trouve un espace central, dans lequel se trouvent en général le levier de vitesse 25 et le frein à main non représenté. Dans cet espace central se trouve aussi un vide-poche 27, généralement sous forme de renfoncement dans lequel l'utilisateur du véhicule 1 peut déposer des objets de taille peu importante.

Sur la figure 2 on peut voir que le mode de réalisation représenté prévoit de placer l'antenne 15b associée au système de démarrage 5 au niveau dudit vide-poche central 27.

En effet, le fait de placer ladite antenne 15b au niveau d'un commutateur sous le volant peut nécessiter d'importants aménagements électriques, notamment pour faire passer des fils électriques dans la colonne de direction, qui peuvent contribuer au coût du dispositif.

De plus, le positionnement de l'antenne 15b dans le vide-poche central 27 du véhicule 1 fait en sorte que l'utilisateur n'a qu'à déposer la clé 7 dans ledit vide-poche 27 pour que l'authentification auprès de l'interface de lecture 9 ait lieu.

Dans un mode de réalisation alternative, le véhicule dispose d'une station d'accueil pouvant recevoir la clé 7. Il est ainsi prévu de disposer l'antenne 15b sur cette station d'accueil.

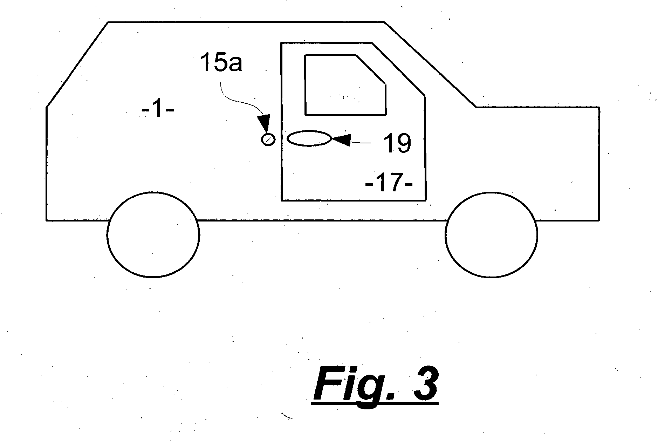

La figure 3 montre une autre alternative de mode de réalisation de l'invention. Sur la figure 3 est représenté de façon schématique un véhicule 1 équipé d'un dispositif de verrouillage/déverrouillage et de démarrage selon l'invention vu de côté. En particulier on peut voir que l'antenne 15a associée au dispositif de verrouillage 5 est dans ce cas disposée au niveau du cadre de l'ouvrant 17 conducteur, en particulier en vis-à-vis de la poignée extérieure 19 de l'ouvrant 17.

En effet, le fait de placer ladite antenne 15a dans l'ouvrant 17 peut nécessiter d'importants aménagements électriques, notamment pour faire passer des fils électrique de l'unité de lecture 9, située généralement à l'avant du véhicule 1 au niveau de l'électronique de bord du véhicule 1, à l'antenne 15a située au niveau de la poignée 19 dans l'ouvrant 17.

De la sorte l'antenne 15a est placée à un endroit vers lequel l'utilisateur approche la clé 7 dans le cadre d'une utilisation normale du véhicule 1, sans pour autant nécessiter les aménagements préalablement cités.

Dans un autre mode de réalisation avantageux on place l'antenne 15 a sur la vitre de l'ouvrant côté conducteur.

Le dispositif de verrouillage/déverrouillage et de démarrage du véhicule 1 proposé permet par l'utilisation de la technologie NFC de rendre les échanges de données de la clé 7 à l'interface de lecture 9 plus difficiles à intercepter, ce qui contribue à améliorer la sécurité du dispositif.

De plus, le placement des antennes 15a, 15b à des endroits dont l'utilisateur s'approche lors de l'utilisation normale du véhicule 1 permet une utilisation simple et intuitive du dispositif de verrouillage et d'immobilisation.

Dans un mode de réalisation alternatif, il est prévu qu'un téléphone mobile soit apparié à la clé 7, c'est-à-dire que le téléphone mobile a chargé les codes d'authentification de la clé 7 nécessaire pour le verrouillage/déverrouillage des ouvrants et/ou le démarrage du moteur. Bien entendu, le téléphone mobile dispose en plus de ses interfaces de communication sur téléphonie mobile comme par exemple le GSM, d'une interface de communication 11 du type de celle présente sur la clé 7 avec laquelle il est apparié. Plus particulièrement, il peut s'agir d'un interface de communication selon un protocole de communication en champs proche NFC. Ainsi le téléphone mobile peut se substituer à la clé 7. L'utilisateur présentera donc le téléphone à proximité d'une antenne 15a pour procéder au verrouillage/déverrouillage des ouvrants. De la même manière, l'utilisateur présentera le téléphone à proximité d'une antenne 15b pour procéder au démarrage du moteur. Dans un mode de réalisation judicieux, l'antenne 15b est située sur la station d'accueil du téléphone portable.

Dans un mode de réalisation supplémentaire on peut prévoir que la clé et/ou le téléphone mobile apparié procède avec l'interface de lecture 9 également à l'échange des données d'authentification par communication bluetooth.

## Revendications

1. Dispositif de verrouillage/déverrouillage et/ou de démarrage d'un véhicule automobile (1) comprenant :
- une clé (7) comportant au moins une interface de communication radiofréquence (11) et une mémoire (13) contenant des données d'authentification de la clé (7),
- une interface de lecture (9) apte à échanger des données avec la clé au moyen d'au moins une antenne (15a, 15b),
- un dispositif de verrouillage/déverrouillage (3) des ouvrants (17) du véhicule (1), relié à l'interface de lecture (9) et apte à commander verrouillage/déverrouillage (3) des ouvrants (17) suite à la réception des données d'authentification de la clé (7) par l'interface de lecture (9),
- un système de démarrage du véhicule (5), relié à l'interface de lecture (9) et apte à commander le démarrage du véhicule suite à la réception des données d'authentification de la clé (7) par l'interface de lecture (9),
- l'interface de communication radiofréquence (11) de la clé (7) et l'interface de lecture (9) étant configurées pour procéder à l'échange des données d'authentification de la clé (7) selon un protocole NFC
**caractérisé en ce qu'**il comprend en outre un téléphone mobile équipé d'une interface de communication radiofréquence du type de l'interface de communication (11) présente sur la clé (7), afin de charger dans ledit téléphone mobile les codes d'authentification de ladite clé (7) pour permettre le verrouillage/déverrouillage des ouvrants (17) et/ou le démarrage du véhicule par échanges des données d'authentification entre le téléphone mobile et l'interface de lecture (9).

2. Dispositif selon la revendication 1, **caractérisé en ce que** l'interface de lecture (9) comporte une antenne (15b) disposée au niveau d'un commutateur de démarrage/arrêt du véhicule (1).

3. Dispositif selon la revendication 1 , **caractérisé en ce que** l'interface de lecture (9) comporte une antenne (15b) disposée dans un vide-poche central (27) de l'habitacle (21) du véhicule.

4. Dispositif selon la revendication 1, **caractérisé en ce que** l'interface de lecture (9) comporte une antenne (15b) disposée sur une station d'accueil pour téléphone mobile disposé dans l'habitacle (21) du véhicule.

5. Dispositif selon l'une des revendications 1 à 4, **caractérisé en ce que** l'interface de lecture (9) comporte une antenne (15a) disposée au niveau de la poignée extérieure (19) d'un ouvrant (17) du véhicule (1).

6. Dispositif selon l'une des revendications 1 à 4, **caractérisé en ce que** l'interface de lecture (9) comporte une antenne (15a) disposée au niveau du cadre d'un ouvrant (17) du véhicule 1.

7. Dispositif selon l'une des revendications 1 à 4, **caractérisé en ce que** l'interface de lecture (9) comporte une antenne (15a) disposée au niveau de la vitre d'un ouvrant (17) du véhicule (1).

8. Dispositif selon l'une des revendications précédentes, **caractérisé en ce que** l'interface de lecture (9) comporte une première antenne (15a) reliée au dispositif de verrouillage/déverrouillage (3) des ouvrants (17), et une seconde antenne (15b) reliée au système de démarrage (5) du véhicule.

9. Dispositif selon l'une des revendications précédentes, **caractérisé en ce que** l'interface de lecture (9) et l'interface de communication radiofréquence (11) sont configurées de manière à ce que l'échange des données d'identification se fait par une communication de type requête/réponse, en particulier par procédé OCSP.

10. Téléphone mobile apte à être utilisé dans un dispositif de verrouillage/déverrouillage et/ou de démarrage d'un véhicule automobile (1) selon l'une des revendications 1 à 9.

## Patentansprüche

1. Verriegelungs-/Entriegelungs- und/oder Startvorrichtung eines Kraftfahrzeugs (1), die enthält:
- einen Schlüssel (7), der mindestens eine Funkfrequenz-Kommunikationsschnittstelle (11) und einen Speicher (13) aufweist, der Authentifizierungsdaten des Schlüssels (7) enthält,
- eine Leseschnittstelle (9), die mittels mindestens einer Antenne (15a, 15b) Daten mit dem Schlüssel austauschen kann,
- eine Verriegelungs-/Entriegelungsvorrichtung (3) der Türen (17) des Fahrzeugs (1), die mit der Leseschnittstelle (9) verbunden ist und die Verriegelung/Entriegelung (3) der Türen (17) nach dem Empfang der Authentifizierungsdaten des Schlüssels (7) durch die Leseschnittstelle (9) steuern kann,
- ein Startsystem des Fahrzeugs (5), das mit der Leseschnittstelle (9) verbunden ist und den Start des Fahrzeugs nach dem Empfang der Authentifizierungsdaten des Schlüssels (7) durch die Leseschnittstelle (9) steuern kann,
- wobei die Funkfrequenz-Kommunikationsschnittstelle (11) des Schlüssels (7) und die Leseschnittstelle (9) konfiguriert sind, den Austausch der Authentifizierungsdaten des Schlüssels (7) gemäß einem NFC-Protokoll auszuführen,
**dadurch gekennzeichnet, dass** sie außerdem ein Mobiltelefon enthält, das mit einer Funkfrequenz-Kommunikationsschnittstelle von der Art der auf dem Schlüssel (7) vorhandenen Kommunikationsschnittstelle (11) ausgestattet ist, um die Authentifizierungscodes des Schlüssels (7) in das Mobiltelefon zu laden, um das Verriegeln/Enriegeln der Türen (17) und/oder den Start des Fahrzeugs durch Austausch der Authentifizierungsdaten zwischen dem Mobiltelefon und der Leseschnittstelle (9) zu erlauben.

2. Vorrichtung nach Anspruch 1, **dadurch gekennzeichnet, dass** die Leseschnittstelle (9) eine Antenne (15b) aufweist, die im Bereich eines Start-/Stopp-Schalters des Fahrzeugs (1) angeordnet ist.

3. Vorrichtung nach Anspruch 1, **dadurch gekennzeichnet, dass** die Leseschnittstelle (9) eine Antenne (15b) aufweist, die in einer zentralen Ablage (27) des Innenraums (21) des Fahrzeugs angeordnet ist.

4. Vorrichtung nach Anspruch 1, **dadurch gekennzeichnet, dass** die Leseschnittstelle (9) eine Antenne (15b) aufweist, die auf einer im Innenraum (21) des Fahrzeugs angeordneten Dockingstation für ein Mobiltelefon angeordnet ist.

5. Vorrichtung nach einem der Ansprüche 1 bis 4, **dadurch gekennzeichnet, dass** die Leseschnittstelle (9) eine Antenne (15a) aufweist, die im Bereich des äußeren Handgriffs (19) einer Tür (17) des Fahrzeugs (1) angeordnet ist.

6. Vorrichtung nach einem der Ansprüche 1 bis 4, **dadurch gekennzeichnet, dass** die Leseschnittstelle (9) eine Antenne (15a) aufweist, die im Bereich des Rahmens einer Tür (17) des Fahrzeugs (1) angeordnet ist.

7. Vorrichtung nach einem der Ansprüche 1 bis 4, **dadurch gekennzeichnet, dass** die Leseschnittstelle (9) eine Antenne (15a) aufweist, die im Bereich der Fensterscheibe einer Tür (17) des Fahrzeugs (1) angeordnet ist.

8. Vorrichtung nach einem der vorhergehenden Ansprüche, **dadurch gekennzeichnet, dass** die Leseschnittstelle (9) eine erste Antenne (15a), die mit der Verriegelungs-/Entriegelungsvorrichtung (3) der Türen (17) verbunden ist, und eine zweite Antenne (15b) aufweist, die mit dem Startsystem (5) des Fahrzeugs verbunden ist.

9. Vorrichtung nach einem der vorhergehenden Ansprüche, **dadurch gekennzeichnet, dass** die Leseschnittstelle (9) und die Funkfrequenz-Kommunikationsschnittstelle (11) so konfiguriert sind, dass der Austausch von Identifikationsdaten über eine Kommunikation von der Art Anfrage/Antwort erfolgt, insbesondere durch OCSP-Verfahren.

10. Mobiltelefon, das in einer Verriegelungs-/Entriegelungs- und/oder Startvorrichtung eines Kraftfahrzeugs (1) nach einem der Ansprüche 1 bis 9 verwendet werden kann.

## Claims

1. Device for locking/unlocking and/or starting a motor vehicle (1) comprising:
- a key (7) including at least one radiofrequency communication interface (11) and a memory (13) containing key (7) authentication data,
- a read interface (9) suitable for exchanging data with the key by means of at least one antenna (15a, 15b),
- a locking/unlocking device (3) for the openings (17) of the vehicle (1), linked to the read interface (9) and suitable for controlling the locking/unlocking (3) of the openings (17) following the reception of the key (7) authentication data via the read interface (9),
- a vehicle starting system (5), linked to the read interface (9) and suitable for controlling the starting of the vehicle following the reception of the key (7) authentication data via the read interface (9),
- the radiofrequency communication interface (11) of the key (7) and the read interface (9) being configured to carry out the exchange of the key (7) authentication data according to an NFC protocol
**characterized in that** it further comprises a mobile telephone equipped with a radiofrequency communication interface of the type of the communication interface (11) present on the key (7), in order to load into said mobile telephone the authentication codes of said key (7) to allow for the locking/unlocking of the openings (17) and/or the starting of the vehicle by exchanges of the authentication data between the mobile telephone and the read interface (9).

2. Device according to Claim 1, **characterized in that** the read interface (9) includes an antenna (15b) arranged at the level of a switch for starting/stopping the vehicle (1).

3. Device according to Claim 1, **characterized in that** the read interface (9) includes an antenna (15b) arranged in a central parcel tray (27) of the interior (21) of the vehicle.

4. Device according to Claim 1, **characterized in that** the read interface (9) includes an antenna (15b) arranged on a mobile telephone docking station arranged in the interior (21) of the vehicle.

5. Device according to one of Claims 1 to 4, **characterized in that** the read interface (9) includes an antenna (15a) arranged at the level of the outside handle (19) of an opening (17) of the vehicle (1).

6. Device according to one of Claims 1 to 4, **characterized in that** the read interface (9) includes an antenna (15a) arranged at the level of the frame of an opening (17) of the vehicle (1).

7. Device according to one of Claims 1 to 4, **characterized in that** the read interface (9) includes an antenna (15a) arranged at the level of the window of an opening (17) of the vehicle (1).

8. Device according to one of the preceding claims, **characterized in that** the read interface (9) comprises a first antenna (15a) linked to the device for locking/unlocking (3) the openings (17), and a second antenna (15b) linked to the starting system (5) of the vehicle.

9. Device according to one of the preceding claims, **characterized in that** the read interface (9) and the radiofrequency communication interface (11) are configured in such a way that the exchange of the identification data is conducted by a communication of question/answer type, in particular by OCSP method.

10. Mobile telephone suitable for use in a device for locking/unlocking and/or starting a motor vehicle (1) according to one of Claims 1 to 9.
